# FASCICULE DE BREVET EUROPEEN

(11) **EP 0 572 741 B1**
(45) Date de publication et mention de la délivrance du brevet: **20.09.1995**
(21) Numéro de dépôt: 92401505.0
(22) Date de dépôt: 03.06.1992
(51) Int. Cl.: B60P 3/34, E04F 10/06

(54) **Store enroulable de poids réduit**
Aufrollbare Markise von geringem Gewicht
Roller awning of reduced weight

(43) Date de publication de la demande: 08.12.1993
(73) Titulaire: Pozzi, Carlo Maurizio, CH-6977 Ruvigliana (CH)
(72) Inventeur: Pozzi, Carlo Maurizio, CH-6977 Ruvigliana (CH)
(74) Mandataire: Colas, Jean-Pierre

(56) Documents cités:
- FR-A- 1 600 528
- GB-A- 2 022 184
- US-A- 3 741 274
- US-E- 30 664

## Description

L'invention concerne un store effaçable par enroulement sur un rouleau et associé à des pieds qui permettent, quand il est déroulé, de le maintenir en position au-dessus de la zone à protéger.

De tels stores sont déjà connus et utilisés sur des véhicules tels que camping car pour réserver à l'arrêt du véhicule une zone d'ombre et de repos sur un côté dudit véhicule (voir par exemple le document GB-A-2 022 184). Mais les stores connus sont généralement lourds, notamment en raison du dispositif de bras articulé qui servent à tendre la toile et sont eux-mêmes articulés aux pieds.

En raison de leur poids, il est exclu de les employer sur les véhicules légers dont la carrosserie n'aurait pas une résistance suffisante.

Le problème qui est à la base de l'invention est de réaliser un store relativement léger, pouvant être supporté par une paroi ou une carrosserie de petite résistance mécanique.

L'invention consiste en ce que le rouleau est creux et en ce que les pieds du store qui sont repliables, pour avoir, à l'état plié, une longueur de l'ordre de la moitié de celle du rouleau, sont adaptés pour pouvoir se loger dans le rouleau quand le store est enroulé.

Une deuxième caractéristique de l'invention qui se combine de préférence avec la première est que le rouleau, au lieu d'être lié à demeure à la paroi de fixation du store est lié au bord libre de la toile de sorte qu'il suit le déroulement de celle-ci et peut d'ailleurs le faciliter grâce à son poids.

Comme au cours du déroulement les pieds peuvent rester à l'intérieur du rouleau pour n'en être extraits qu'après la fin du déroulement, lesdits pieds peuvent avantageusement être articulés sur une sorte de piston mobile en translation et en rotation dans le rouleau de sorte qu'après déroulement il est facile d'extraire les pieds du rouleau et de les développer pour qu'ils jouent leur rôle.

L' invention ressortira de la description des dessins annexés à titre d'exemple.

La figure 1 est une vue en bout du rouleau, toile complètement enroulée et pieds placés dans le rouleau.

La figure 2 montre en coupe axiale l'une des extrémités du rouleau, les pieds encore pliés venant d'être tirés hors du rouleau.

La figure 3 est une vue schématique en élévation du store en déroulement.

La figure 4 est une vue semblable du store déroulé et tendu.

Sur les dessins on voit en 1 le rouleau constitué par un cylindre creux en aluminium par exemple, sur lequel s'enroule la toile 8 du store.

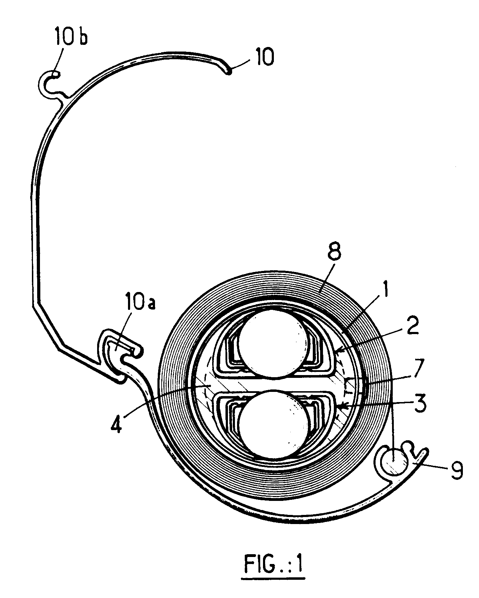

Au repos, toile complètement enroulée sur le rouleau, le tout peut être placé dans une boite munie d'un couvercle 10 articulé en 10a, l'un des bords longitudinaux de la toile étant attaché en 9 sur la boite, par tous moyens convenables (figure 1). La boite fermée contenant le store peut être placée dans le véhicule ou fixée sur un côté de la carrosserie par des crochets tels que 10b.

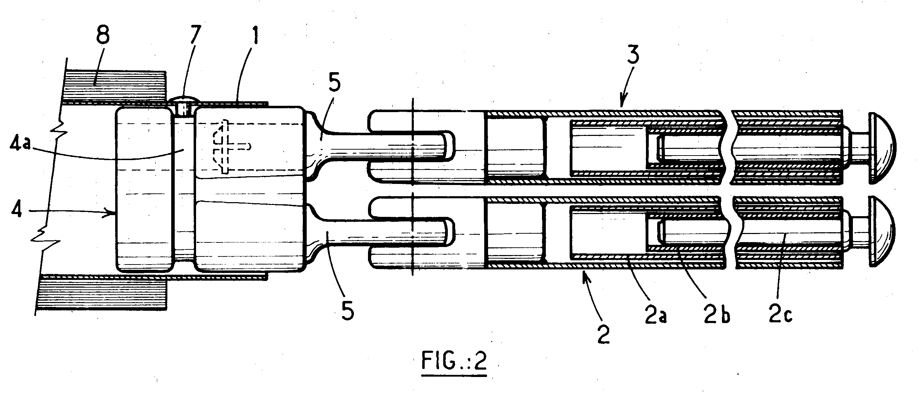

A chaque extrémité du cylindre 1 se trouve une paire de pieds 2, 3 dont l'une est montrée sur la figure 2. Ces pieds sont formés de parties 2a, 2b, 2c pouvant coulisser les unes dans les autres, donc extensibles et repliables télescopiquement, lesdites parties 2a, 2b, 2c étant en nombre tel que la longueur des pieds repliés puisse trouver place dans le rouleau 1 à chaque extrémité de celui-ci.

Dans le cylindre 1, se trouve une sorte de piston 4 qui peut y tourner librement et peut aussi être déplacé en translation dans ce cylindre quand on veut rentrer les pieds ou au contraire les extraire (position de la figure 2). On voit sur le dessin une butée à ressort 7 montée sur le cylindre et engagée dans une rainure circulaire 4a du piston 4, grâce à quoi le piston 4 est arrêté dans la position de sortie des pieds tout en pouvant tourner librement. Quand on veut rentrer le piston avec les pieds, il faut forcer un peu pour obliger la butée à sortir élastiquement de la rainure. Chacun des pieds télescopiques est articulé autour d'un axe perpendiculaire à l'axe du cylindre 1 sur une patte 5 portée par le piston 4. Chacune de ces pattes peut elle-même tourner par rapport au piston 4 autour d'un axe parallèle à l'axe du cylindre.

En dehors des périodes d'emploi du store, les pistons 4, sont enfoncés dans le cylindre de même que les pieds repliés 2 et 3 et l'ensemble présente à chaque bout du cylindre l'aspect que l'on a représenté sur la figure 1.

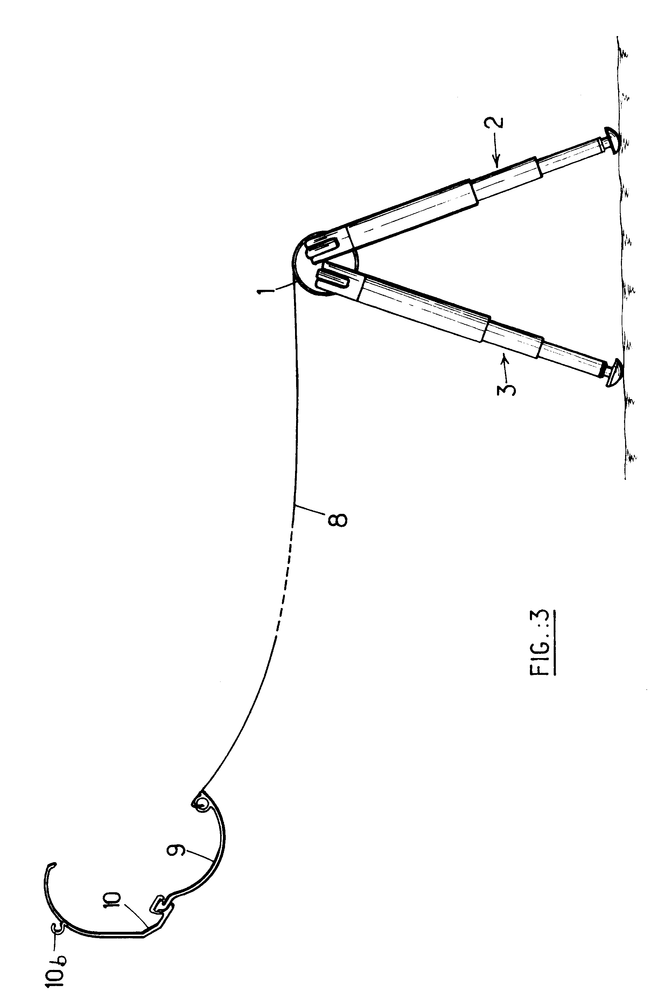

Quand on veut se servir du store on ouvre la boite 9, 10, on en retire le rouleau en le tenant par ses deux extrémités, on en retire les pieds (position de la figure 2) on commence à dérouler la toile le début du déroulement étant aidé par le poids du rouleau et des pieds. Grâce aux deux articulations de chaque pied sur son piston 4, on peut placer les pieds dans une position telle que celle de la figure 3, où ils constituent une sorte de chevalet permettant de supporter le poids du cylindre avec la toile déroulée.

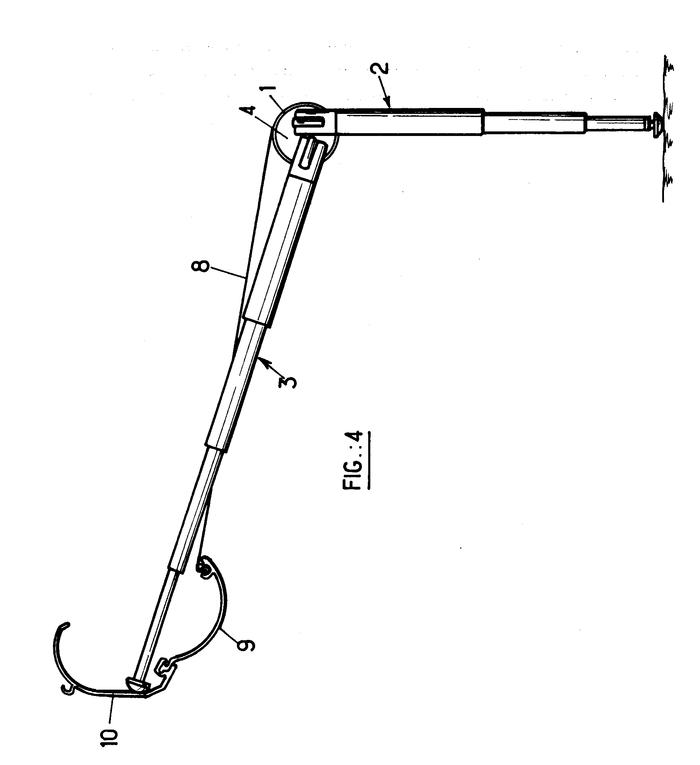

Quand on a déroulé suffisamment la toile, on peut ajuster la position des pieds et mettre à chaque bout l'un deux (figure 3) réglé à sa longueur maximale, le long d'un petit côté de la toile pour qu'il forme tendeur en venant s'arcbouter contre la boite ou toute autre butée qui peut être prévue (figure 4).

La boite avec son couvercle est faite en un matériau léger ayant une certaine rigidité par exemple en aluminium extrudé. Des crochets 10a permettent de la suspendre à une paroi.

On peut faciliter l'enroulement et le déroulement en montant à un bout du rouleau ou aux deux bouts, un petit moteur électrique dont on tiendra le stator à la main et dont le rotor sera lié au cylindre 1 par des engrenages.

## Revendications

1. Store effaçable par enroulement sur un rouleau (1) et associé à des pieds escamotables (2, 3) qui permettent, quand le store est déroulé et les pieds déployés de le maintenir en position au-dessus de la zone à protéger, caractérisé en ce que le rouleau (1) est creux et en ce que les pieds (2, 3) du store qui sont repliables, pour avoir, à l'état plié, une longueur de l'ordre de la moitié de celle du rouleau, sont adaptés pour pouvoir se loger dans le rouleau quand le store est enroulé.

2. Store selon la revendication 1, caractérisé en ce que le rouleau, au lieu d'être lié à demeure à une paroi de fixation du store, est lié au bord libre de la toile (8) de sorte qu'il accompagne le déroulement de celle-ci.

3. Store selon la revendication 1 ou 2, caractérisé en ce que les pieds (2, 3) sont télescopiques.

4. Store selon l'une des revendications précédentes, caractérisé en ce que deux pieds (2, 3) sont prévus à chaque extrémité du rouleau (1) et sont articulés chacun à une sorte de piston (4) pouvant se déplacer en translation à l'intérieur du rouleau.

5. Store selon la revendication 4, caractérisé en ce que le piston (4) peut en outre tourner librement dans le rouleau.

6. Store selon la revendication 5, caractérisé en ce que le piston (4) comporte une rainure circulaire (4a) dans laquelle pénètre une goupille d'arrêt (7) quand le piston est dans la position qui correspond à la sortie des pieds (2, 3).

7. Store selon l'une des revendications précédentes, caractérisé en ce que chacun des pieds (2, 3) est lié au piston par une articulation double comportant un axe parallèle à celui du cylindre et un deuxième axe perpendiculaire.

8. Store selon l'une des revendications précédentes, caractérisé en ce que l'un des pieds (2, 3) a une longueur adaptée pour pouvoir former tendeur le long d'un petit côté de la toile.

## Claims

1. Shade which can be retracted by winding onto a roller and has associated legs which, when it is unwound, enable it to be held in position above the zone which is to be protected, characterised in that the roller (1) is hollow and in that the legs (2, 3) of the shade, which are collapsible so as to have in the collapsed state a length of the order of half that of the roller, are adapted to be housed in the roller when the shade is wound up.

2. Shade according to Claim 1, characterised in that, instead of being held stationary on a wall to which the shade is fixed, the roller is joined to the free edge of the cloth, so that it accompanies the unwinding of the latter.

3. Shade according to Claim 1 or 2, characterised in that the legs are telescopic.

4. Shade according to one of the preceding claims, characterised in that two legs are provided at each end of the roller and each is hinged to a kind of piston (4) capable of translatory movement inside the roller.

5. Shade according to Claim 4, characterised in that the piston (4) can in addition turn freely in the roller.

6. Shade according to Claim 5, characterised in that the piston (4) has a circular groove (4a) into which a stop pin (7) penetrates when the piston is in the position corresponding to the extraction of the legs.

7. Shade according to one of the preceding claims, characterised in that each of the legs is connected to the piston by a double joint comprising an axis parallel to that of the cylinder and a second axis at right angles thereto.

8. Shade according to one of the preceding claims, characterised in that one of the legs has a length enabling it to form a tensioner along a shorter side of the cloth.

## Patentansprüche

1. Markise, die durch Aufwickeln auf eine Rolle verstaut werden kann und der Füße zugeordnet sind, die, wenn sie abgewickelt worden ist, ermöglichen, daß sie in Position oberhalb der zu schützenden Zone gehaltert werden kann, dadurch gekennzeichnet, daß die Rolle (1) hohl ist und daß die Füße (2, 3) der Markise, die einfahrbar, einklappbar bzw. zusammenlegbar sind, um im zusammengepackten Zustand eine Länge in der Größenordnung der Hälfte derjenigen der Rolle haben, in der Rolle untergebracht werden können, wenn die Markise aufgewickelt worden ist.

2. Markise nach dem Anspruch 1, dadurch gekennzeichnet, daß die Rolle, anstatt daß sie auf Dauer mit einer Befestigungswand der Markise verbunden ist, mit dem freien Rand der Bahn bzw. des Tuches derartig verbunden ist, daß sie deren Abwicklung begleitet.

3. Markise nach Anspruch 1 oder 2, dadurch gekennzeichnet, daß die Füße teleskopisch ausgebildet sind.

4. Markise nach einem der vorangehenden Ansprüche, dadurch gekennzeichnet, daß zwei Füße an jedem Ende der Rolle vorgesehen und jeweils an einer Art eines im Inneren der Rolle hin- und herbeweglichen Kolbens (4) angelenkt sind.

5. Markise nach dem Anspruch 4, dadurch gekennzeichnet, daß der Kolben (4) darüber hinaus innerhalb der Rolle frei drehbar ist.

6. Markise nach dem Anspruch 5, dadurch gekennzeichnet, daß der Kolben (4) eine kreisförmige Nut (4a) aufweist, in welche ein Arretierungsstift (7) hineinragt, wenn der Kolben sich in der dem ausgefahrenen Zustand der Füße entsprechenden Stellung befindet.

7. Markise nach einem der vorangehenden Ansprüche, dadurch gekennzeichnet, daß jeder Fuß mit dem Kolben über eine Doppelanlenkung verbunden ist, welche eine zu der Zylinderachse parallele Achse und eine zweite senkrechte Achse aufweist.

8. Markise nach einem der vorangehenden Ansprüche, dadurch gekennzeichnet, daß einer der Füße eine so bemessene Länge hat, um Spannung längs einer kleinen Seite der Bahn oder des Tuches ausüben zu können.
